(19)

Europäisches
Patentamt
European
Patent Office
Office européen
des brevets

(11) **EP 4 365 326 A1**

(12) **EUROPEAN PATENT APPLICATION**
published in accordance with Art. 153(4) EPC

(43) Date of publication:
08.05.2024 Bulletin 2024/19

(21) Application number: 22864514.9

(22) Date of filing: 29.08.2022

(51) International Patent Classification (IPC):
$C22C\ 38/00^{(2006.01)}$   $C22C\ 38/58^{(2006.01)}$
$B23K\ 35/30^{(2006.01)}$   $B23K\ 35/362^{(2006.01)}$
$B23K\ 35/368^{(2006.01)}$   $B23K\ 9/18^{(2006.01)}$

(52) Cooperative Patent Classification (CPC):
B23K 9/18; B23K 35/30; B23K 35/362;
B23K 35/368; C22C 38/00; C22C 38/58

(86) International application number:
PCT/JP2022/032458

(87) International publication number:
WO 2023/032932 (09.03.2023 Gazette 2023/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.08.2021 JP 2021140869

(71) Applicant: JFE Steel Corporation
Tokyo 100-0011 (JP)

(72) Inventors:
• ANDO, Akiyoshi
Tokyo 100-0011 (JP)

• TAKADA, Atsushi
Tokyo 100-0011 (JP)
• WATANABE, Kazufumi
Tokyo 100-0011 (JP)
• OKABE, Takatoshi
Tokyo 100-0011 (JP)
• UEDA, Keiji
Tokyo 100-0011 (JP)
• SUZUKI, Masamichi
Fujisawa-shi, Kanagawa 251-8551 (JP)
• HAN, Peng
Fujisawa-shi, Kanagawa 251-8551 (JP)

(74) Representative: Grünecker Patent- und
Rechtsanwälte
PartG mbB
Leopoldstraße 4
80802 München (DE)

(54) **SUBMERGED ARC WELDING METHOD**

(57) Provided is a submerged arc welding method that produces little fume, has good weldability, and is suitable for welding high-Mn-containing steel materials to be used in cryogenic environments. The method includes welding with a combination of a wire having a predetermined chemical composition and flux having a basicity [BL] of 1.5 to 2.4, while adjusting a welding heat input according to a groove cross-sectional area. In this way, a weld metal with high strength and excellent cryogenic impact toughness where the 0.2 % proof stress at room temperature is 400 MPa or more and an absorbed energy ($vE_{-196}$) in the Charpy impact test is 28 J or more can be easily manufactured.

*FIG. 1*

EP 4 365 326 A1

**Description**

TECHNICAL FIELD

This disclosure relates to a submerged arc welding method, especially to a welding material suitable for welding a steel material with a high Mn content to be used in cryogenic environments and to a submerged arc welding method using this material.

BACKGROUND

In recent years, environmental regulations are becoming stricter. Because liquefied natural gas (hereinafter also referred to as "LNG") does not contain sulfur, it is said to be a clean fuel that does not generate air pollutants such as sulfides and oxides, and the demand for liquefied natural gas is increasing. To transport or store LNG, containers (tanks) for transporting or storing LNG are required to maintain excellent cryogenic impact toughness at temperatures below -162 °C, which is the liquefaction temperature of LNG. Due to the need to maintain excellent cryogenic impact toughness, aluminum alloys, 9 % Ni steel, austenitic stainless steel, and the like have conventionally been used as materials for the containers and the like.

However, aluminum alloys have low tensile strength. As a result, when they are used as a structure, it is necessary to design the plate to have a large thickness, and there is also a problem of poor welding workability. Further, 9 % Ni steel is economically disadvantageous because it needs to use expensive Ni-based materials as welding materials. Furthermore, austenitic stainless steel has problems in that it is expensive and has low base metal strength.

Due to these problems, it has recently been studied to use high-Mn-containing steel (hereinafter also referred to as "high-Mn steel") containing Mn in a range of 10 % by mass to 35% by mass as a material for containers for transporting or storing LNG. Even at cryogenic temperatures, the high-Mn steel has an austenitic metallic structure, does not suffer from brittle fracture, and has higher strength than austenitic stainless steel. Therefore, it has been desired to develop a stable welding method for the high-Mn steel.

In response to such requests, for example, JP 6621572 B (PTL 1) describes a solid wire for gas metal arc welding, which has a basic composition containing, in mass%, C: 0.2 % to 0.8 %, Si: 0.15 % to 0.90 %, Mn: 17.0 % to 28.0 %, P: 0.03 % or less, S: 0.03 % or less, Ni: 0.01 % to 10.00 %, Cr: 0.4 % to 4.0 %, Mo: 0.01 % to 3.50 %, B: less than 0.0010 %, N: 0.12 % or less, with the balance being Fe and inevitable impurities, and if necessary, it contains at least one selected from V, Ti and Nb, and further contains at least one selected from Cu, Al, Ca and REM. If welding is performed using the solid wire for gas metal arc welding described above, it is possible to manufacture a welded joint which produces a small amount of fume, has high strength with a room temperature yield strength (0.2 % proof stress) of 400 MPa or more and an absorbed energy ($vE_{-196}$) of 28 J or more in the Charpy impact test at a test temperature of -196 °C, and has excellent cryogenic impact toughness.

CITATION LIST

Patent Literature

PTL 1: JP 6621572 B

SUMMARY

(Technical Problem)

However, according to our study, although the technology described in PTL 1 can suppress the amount of fume formed during welding to 1200 mg/min or less, there is a problem that when the welding heat input is increased to improve the welding efficiency, the amount of fume formed is also proportionally increased. If a submerged arc welding method that forms less fume is used to solve this problem, the amount of fume formed is suppressed, but there are problems including irregular bead shape, poor slag removability, deteriorated yield strength, and deteriorated low-temperature toughness.

It could thus be helpful to provide a submerged arc welding method that produces little fume during welding even under welding conditions with high heat input (3 kJ/mm or more), has good weldability including good bead shape and good slag removability, and can produce a weld metal that has both high strength and excellent cryogenic toughness and is suitable as a welding material for high-Mn-containing steel materials to be used in cryogenic environments.

As used herein, the words "produces little fume during welding" refer to the case where the amount of fume formed is 1200 mg/min or less when submerged arc welding is performed in accordance with JIS Z 3930-2013.

The words "high strength" refer to the case where the room temperature yield strength (0.2 % proof stress) of a weld metal produced in accordance with the provisions of JIS Z 3111 is 400 MPa or more. The words "excellent cryogenic toughness" refer to the case where the absorbed energy ($vE_{-196}$) of the Charpy impact test at a test temperature of -196 °C of a weld metal produced in accordance with the provisions of JIS Z 3111 is 28 J or more.

(Solution to Problem)

To achieve the above, we first found that it is effective to control the composition of flux to obtain a proper bead shape, good slag removability, and good weld metal properties in submerged arc welding. As a result of repeated studies on the flux composition, we found that when welding is performed using flux with a basicity [BL] of 1.5 to 2.4, poor slag peeling, irregular bead shape, and deterioration of low-temperature toughness can be suppressed.

Further, we found that even with the aforementioned welding wire and the above flux, the yield strength of a material to be welded may decrease depending on the thickness, groove shape and welding conditions. Therefore, we conducted further investigation and found that determining welding conditions by controlling the welding heat input with respect to the groove cross-sectional area within an appropriate range is effective in preventing a decrease in yield strength.

The present disclosure is based on these findings and further studies. We thus provide the following.

[1] A submerged arc welding method, comprising welding with a combination of a wire for submerged arc welding and flux having a basicity [BL] of 1.5 to 2.4, wherein

the wire for submerged arc welding comprises a chemical composition containing (consisting of), in mass%, C: 0.20 % to 0.80 %, Si: 0.15 % to 0.90 %, Mn: 17.0 % to 28.0 %, P: 0.030 % or less, S: 0.030 % or less, Ni: 0.01 % to 10.00 %, Cr: 0.4 % to 4.0 %, Mo: 0.01 % to 3.50 %, and N: 0.120 % or less, with the balance being Fe and inevitable impurities;
the basicity [BL] is defined by the following formula (1), BL = (%CaO+%MgO+%BaO+%SrO+%Na$_2$O+%K$_2$O+%Li$_2$O+%CaF$_2$ +0.5%MnO+0.5%FeO)/(%SiO$_2$+0.5%Al$_2$O$_3$+0.5%TiO$_2$+0.5%ZrO$_2$)

where the content of each component in the formula (1) is expressed in mass%; and
the welding is performed with welding heat input [Q] satisfying the following formula (2),

$$S[\mathrm{mm}^2]/Q[\mathrm{J/mm}] \geq 0.028 \qquad (2)$$

where Q[J/mm] = I[A]×E[V]×60/V[mm/min],
I $\geq$ 300[A], E $\geq$ 15[V], V $\geq$ 100[mm/min], and
where "S" is a groove cross-sectional area, "Q" is welding heat input, "I" is welding current, "E" is arc voltage, and "V" is welding speed.

[2] The submerged arc welding method according to aspect [1], wherein the chemical composition further contains, in mass%, at least one selected from the group consisting of V: 0.040 % or less, Ti: 0.040 % or less, and Nb: 0.040 % or less.

[3] The submerged arc welding method according to aspect [1] or [2], wherein the chemical composition further contains, in mass%, at least one selected from the group consisting of Cu: 1.00 % or less, Ca: 0.010 % or less, and REM: 0.020 % or less.

[4] The submerged arc welding method according to any one of aspects [1] to [3], wherein welding is performed in 3 or more layers.

[5] The submerged arc welding method according to any one of aspects [1] to [4], wherein a steel material to be welded is a high-strength and high-Mn steel material for cryogenic use, which comprises a chemical composition containing (consisting of), in mass%, C: 0.20 % to 0.80 %, Si: 0.15 % to 0.90 %, Mn: 15.0 % to 30.0 %, P: 0.030 % or less, S: 0.030 % or less, Ni: 3.00 % or less, and Cr: 1.0 % to 8.0 %, with the balance being Fe and inevitable impurities.

[6] The submerged arc welding method according to aspect [5], wherein the chemical composition of the steel material further contains, in mass%, at least one selected from the group consisting of V: 2.00 % or less, Ti: 1.00 % or less, Nb: 1.00 % or less, Al: 0.100 % or less, Cu: 1.00 % or less, N: 0.120 % or less, O (oxygen): 0.0050 % or less, B: 0.0030 % or less, and REM: 0.0200 % or less.

(Advantageous Effect)

According to the present disclosure, it is possible to provide a welding material for high-Mn-containing steel materials that can significantly suppress the amount of fume formed during submerged arc welding and has good bead shape and slag removability. When high-Mn-containing steel is submerged arc welded using this welding material, it is possible to easily obtain a weld metal with high strength and excellent cryogenic toughness where a room temperature yield strength (0.2 % proof stress) is 400 MPa or more and an absorbed energy ($vE_{-196}$) in the Charpy impact test at a test temperature of -196 °C is 28 J or more. The present disclosure can provide the welding material and a submerged arc welding method using the welding material, thereby achieving significantly advantageous effects in industrial terms.

BRIEF DESCRIPTION OF THE DRAWINGS

In the accompanying drawing:

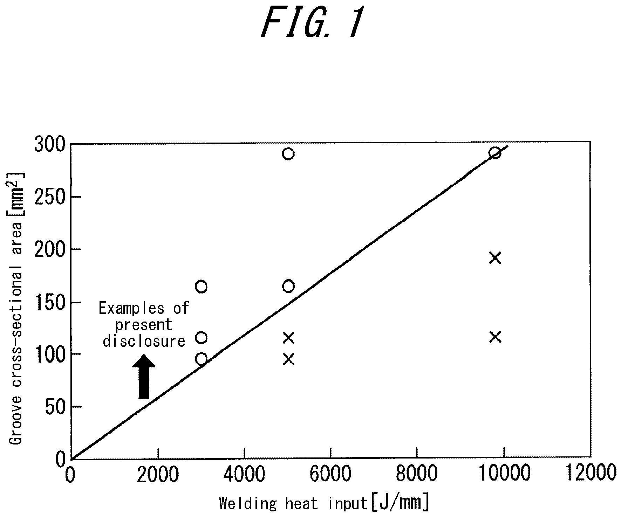

FIG. 1 illustrates the relationship between the groove cross-sectional area and the welding heat input in submerged arc welding.

DETAILED DESCRIPTION

The following describes embodiments of the present disclosure in detail.
The present disclosure relates to a submerged arc welding method using a specific welding material especially for high-Mn-containing steel materials. First, submerged arc welding (hereinafter also referred to as "SAW") will be explained.

[Submerged arc welding]

SAW is a welding method in which an electrode wire is continuously supplied into powdered flux that has been spread on base metal to cause an arc between the tip of the electrode wire and the base metal to continuously perform welding. This SAW has the advantage of being able to efficiently perform welding by applying a large current to increase the wire welding speed.
The electrode wire may be a solid wire or a flux-cored wire containing flux for wire inside the wire, either of which can be used in the present disclosure. In the case of using a flux-cored wire, the chemical compositions of the steel shell, metal powder, and flux powder for wire to be used are adjusted before producing the flux-cored wire.
Examples of the submerged arc welding of the present disclosure include the following. Two steel materials to be welded are butted together to form a 45-degree V-shaped groove, and flux is spread in advance to cover the formed groove. Using a prepared solid wire (diameter 4.0 mmø) or flux-cored wire (diameter 3.2 mmø), submerged arc welding is performed in a flat position under conditions of current: 350 A to 650 A (DCEP), voltage: 28 V to 36 V, welding speed: 20 cm/min to 80 cm/min, welding heat input: 0.7 kJ/mm to 8.0 kJ/mm, and temperature between passes: 100 °C to 150 °C.
High-Mn steel, which serves as base metal, is butted together under the above submerged arc welding conditions, and a weld metal for forming a weld joint is produced using the flux for welding and the wire for submerged arc welding described below.

[Basic composition of wire for submerged arc welding]

Next, the basic composition of a welding wire suitable for the submerged arc welding of high-Mn steel materials of the present disclosure will be described. In the following description, "%" with respect to the composition means "mass percent".

[C: 0.20 % to 0.80 %]

C is an element that increases the strength of weld metal by solid solution strengthening. C also stabilizes the austenite phase and improves the cryogenic impact toughness of weld metal. To achieve these effects, the C content needs to be 0.20 % or more. However, when the C content exceeds 0.80 %, carbides are precipitated, the cryogenic toughness is deteriorated, and hot cracks are more likely to occur during welding. Therefore, the C content is limited to a range of 0.20 % to 0.80 %. It is preferably 0.30 % or more. It is preferably 0.70 % or less. It is more preferably 0.40 % or more. It is more preferably 0.60 % or less. It is still more preferably 0.45 % or more. It is still more preferably 0.55 % or less.

[Si: 0.15 % to 0.90 %]

Si acts as a deoxidizer, which increases the yield of Mn, increases the viscosity of molten metal, stably maintains the bead shape, and reduces the occurrence of spatter. To achieve these effects, the Si content needs to be 0.15 % or more. However, when the content exceeds 0.90 %, the cryogenic toughness of weld metal is deteriorated. Further, Si segregates during solidification and forms a liquid phase at the solidification cell interface, which deteriorates the hot crack resistance. Therefore, the Si content is limited to a range of 0.15 % to 0.90 %. It is preferably 0.20 % or more. It is preferably 0.80 % or less. It is more preferably 0.25 % or more. It is more preferably 0.70 % or less. It is still more preferably 0.30 % or more. It is still more preferably 0.65 % or less. It is even more preferably 0.40 % or more. It is even more preferably 0.60 % or less.

[Mn: 17.0 % to 28.0 %]

Mn is an inexpensive element that stabilizes the austenite phase, and the present disclosure requires a Mn content of 17.0 % or more. When the Mn content is less than 17.0 %, a ferrite phase is formed in weld metal, and the toughness at cryogenic temperatures is significantly deteriorated. On the other hand, when the Mn content exceeds 28.0 %, Mn excessively segregates during solidification, inducing hot cracks. Therefore, the Mn content is limited to a range of 17.0 % to 28.0 %. It is preferably 18.0 % or more. It is preferably 27.0 % or less. It is more preferably 19.0 % or more. It is more preferably 26.0 % or less. It is still more preferably 20.0 % or more. It is still more preferably 24.0 % or less.

[P: 0.030 % or less]

P is an element that segregates at crystal grain boundaries and induces hot cracks. In the present disclosure, it is preferable to reduce the P content as much as possible, but a content of 0.030 % or less is acceptable. Therefore, the P content is limited to 0.030 % or less. Excessive reduction leads to a rise in refining costs. Therefore, it is preferable to adjust the P content to 0.003 % or more. It is more preferably 0.005 % or more. It is more preferably 0.020 % or less. It is still more preferably 0.009 % or more. It is still more preferably 0.016 % or less.

[S: 0.030 % or less]

S is present as MnS, which is a sulfide-based inclusion, in weld metal. Since MnS serves as a starting point for fracture, it deteriorates the cryogenic toughness. Therefore, the S content is limited to 0.030 % or less. Excessive reduction leads to a rise in refining costs. Therefore, it is preferable to adjust the S content to 0.001 % or more. It is more preferably 0.008 % or more. It is more preferably 0.025 % or less. It is still more preferably 0.013 % or more. It is still more preferably 0.020 % or less.

[Ni: 0.01 % to 10.00 %]

Ni is an element that strengthens the austenite grain boundaries, which segregates at grain boundaries to improve the cryogenic impact toughness. To achieve this effect, the Ni content needs to be 0.01 % or more. Ni also stabilizes the austenite phase, and therefore, a further increase in Ni content stabilizes the austenite phase and improves the cryogenic impact toughness of weld metal. However, Ni is an expensive element, and a content exceeding 10.00 % is economically disadvantageous. Therefore, the Ni content is limited to 0.01 % to 10.00 %. It is preferably 0.05 % or more. It is preferably 7.5 % or less. It is more preferably 1.00 % or more. It is more preferably 4.00 % or less. It is still more preferably 1.50 % or more. It is still more preferably 2.50 % or less.

[Cr: 0.4 % to 4.0 %]

Cr is as an element that stabilizes the austenite phase at cryogenic temperatures, which improves the cryogenic impact toughness of weld metal. Further, Cr improves the strength of weld metal. Cr also acts effectively to increase the liquidus temperature of molten metal and suppress the occurrence of hot crack. Further, Cr acts effectively to improve the corrosion resistance of weld metal. To achieve these effects, the Cr content needs to be 0.4 % or more. When the Cr content is less than 0.4 %, the above effects cannot be ensured. On the other hand, when the Cr content exceeds 4.0 %, Cr carbides are formed, and the cryogenic toughness is deteriorated. Further, the formation of carbide deteriorates the workability during wire drawing. Therefore, the Cr content is limited to a range of 0.4 % to 4.0 %. It is preferably 0.5 % or more. It is preferably 3.5 % or less. It is more preferably 0.8 % or more. It is more preferably 3.0 % or less. It is still more preferably 1.0 % or more. It is still more preferably 2.0 % or less.

[Mo: 0.01 % to 3.50 %]

Mo is an element that strengthens the austenite grain boundaries, which segregates at grain boundaries to improve the strength of weld metal. Such an effect becomes remarkable at a content of 0.01 % or more. When the content exceeds 0.01 %, it also has the effect of improving the strength of weld metal by solid solution strengthening. On the other hand, when the content exceeds 3.50 %, it precipitates as carbides, which deteriorates the hot workability and, for example, induces cracking during wire drawing to deteriorate the manufacturability of the wire. Therefore, the Mo content is limited to a range of 0.01 % to 3.50 %. It is preferably 0.50 % or more. It is preferably 3.00 % or less. It is more preferably 1.00 % or more. It is more preferably 2.80 % or less. It is still more preferably 1.50 % or more. It is still more preferably 2.20 % or less.

[N: 0.120 % or less]

N is an element that is inevitably mixed, but like C, it is an element that effectively contributes to improving the strength of weld metal, stabilizes the austenite phase, and stably improves the cryogenic toughness. Since these effects become remarkable with a content of 0.030 % or more, it is preferable to contain 0.030% or more of N. However, when the N content exceeds 0.120 %, nitrides are formed, and the low-temperature toughness is deteriorated. Therefore, the N content is limited to 0.120 % or less. It is preferably 0.030 % to 0.120 %. It is more preferably 0.060 % or more. It is more preferably 0.100 % or less.

[Optional composition of wire for submerged arc welding]

The composition described above is the basic composition of the wire of the present disclosure. In the present disclosure, the composition of the wire may be an optional composition containing, as optional components, if necessary, at least one selected from the group consisting of V: 0.040 % or less, Ti: 0.040 % or less, and Nb: 0.040 % or less, in addition to the basic composition. The basic composition and the optional composition may further contain, if necessary, at least one selected from the group consisting of Cu: 1.00 % or less, Ca: 0.010 % or less, and REM: 0.020 % or less.
V, Ti, and Nb are all elements that promote the formation of carbide and contribute to improving the strength of weld metal, and at least one of these elements may be optionally contained as needed.

[V: 0.040 % or less]

V is a carbide-forming element, which precipitates fine carbides and contributes to improving the strength of weld metal. To achieve this effect, the V content is preferably 0.001 % or more. However, when the V content exceeds 0.040 %, the carbides are coarsened, resulting in deterioration of cryogenic toughness. Therefore, if contained, the V content is preferably 0.040 % or less. The V content is more preferably 0.001 % to 0.040 %. It is even more preferably 0.020 % or more.

[Ti: 0.040 % or less]

Ti is also a carbide-forming element, which precipitates fine carbides and contributes to improving the strength of weld metal. Further, Ti precipitates carbides at the solidification cell interface of weld metal, which contributes to suppressing the occurrence of hot crack. To achieve these effects, the Ti content is preferably 0.001 % or more. However, when the Ti content exceeds 0.040 %, the carbides are coarsened as in the case of V, resulting in deterioration of cryogenic toughness. Therefore, if contained, the Ti content is preferably 0.040 % or less. The Ti content is more preferably 0.001 % to 0.040 %. It is even more preferably 0.020 % or more.

[Nb: 0.040 % or less]

Nb is also a carbide-forming element, which precipitates fine carbides and contributes to improving the strength of weld metal. Further, Nb precipitates carbides at the solidification cell interface of weld metal, which contributes to suppressing the occurrence of hot crack. To achieve these effects, the Nb content is preferably 0.001 % or more. However, when the Nb content exceeds 0.040 %, the carbides are coarsened as in the cases of V and Ti, resulting in deterioration of cryogenic toughness. Therefore, if contained, the Nb content is preferably 0.040 % or less. The Nb content is more preferably 0.001 % to 0.040 %. It is even more preferably 0.005 % or more.
On the other hand, Cu is an element that contributes to austenite stabilization, Ca and REM are elements that contribute to improving the workability, and at least one of these elements may be optionally contained as needed. The reasons for the limitation are described below.

[Cu: 1.00 % or less]

Cu is an element that stabilizes the austenite phase. It stabilizes the austenite phase even at cryogenic temperatures, which improves the cryogenic impact toughness of weld metal. To achieve this effect, the Cu content is preferably 0.01 % or more. However, when it is contained in a large amount exceeding 1.00 %, the hot ductility is deteriorated. Therefore, if contained, the Cu content is preferably 1.00 % or less. The Cu content is more preferably 0.01 % to 1.00 %. It is still more preferably 0.05 % or more. It is still more preferably 0.60 % or less.

[Ca: 0.010 % or less]

Ca combines with S in molten metal to form CaS, which is a sulfide with a high melting point. Because CaS has a higher melting point than MnS, it maintains a spherical shape without advancing in the rolling direction during hot working of the wire, which is advantageous for improving the workability of the wire. Such an effect becomes remarkable at a content of 0.001 % or more. On the other hand, when the Ca content exceeds 0.010 %, the arc is disturbed during welding, rendering stable welding difficult. Therefore, if contained, the Ca content is preferably 0.010 % or less. It is more preferably 0.001 % or more. It is more preferably 0.008 % or less. It is still more preferably 0.003 % or more. It is still more preferably 0.006 % or less.

[REM: 0.020 % or less]

REM refers to rare earth elements such as Sc, Y, La, and Ce. It is a strong deoxidizer and is present in weld metal in the form of REM oxides. The REM oxide serves as a nucleation site during solidification, thereby contributing to the refinement of crystal grains and the improvement of the strength of weld metal. Such an effect becomes remarkable at a content of 0.001 % or more. However, when the content exceeds 0.020 %, the arc stability is deteriorated. Therefore, if contained, the REM content is preferably 0.020 % or less. It is more preferably 0.001 % or more. It is still more preferably 0.005 % or more. It is still more preferably 0.015 % or less.

[Balance composition]

The balance composition other than the above-mentioned composition consists of Fe and inevitable impurities. The inevitable impurities include, for example, O (oxygen), B, Al, Sn, Sb, As, Pb, and Bi. In the wire, the amount of O (oxygen) is preferably 0.15 % or less, the amount of B is preferably 0.001 % or less, the amount of Al is preferably 0.100 % or less, the amount of each of Sn, Sb and As is preferably 0.005 % or less, and the amount of each of Pb and Bi is preferably 0.0001 % or less. The containing of inevitable impurity elements other than those above is acceptable as long as the above-mentioned basic composition or optional composition is satisfied, and such embodiments are also included within the technical scope of the present disclosure.

[Method of producing wire]

The following describes a method of producing the wire for SAW (solid wire and flux-cored wire) of the present disclosure.
The wire for SAW of the present disclosure may be produced with any conventional method of producing a welding wire.
For example, the solid wire of the present disclosure is preferably produced as follows. A casting process in which molten steel having the above-mentioned composition is melted in a conventional melting furnace such as an electric furnace or a vacuum melting furnace and cast with a mold of a predetermined shape or the like, a heating process in which the obtained steel ingot is heated to a predetermined temperature, and a hot rolling process in which the heated steel ingot is hot-rolled into a steel material of a specified shape (bar shape) are performed sequentially. Further, a cold rolling process is performed in which the obtained steel material (in bar shape) is subjected to cold rolling (cold drawing) multiple times and, if necessary, annealed at an annealing temperature of 900 °C to 1200 °C to obtain a wire of the desired size.
The flux-cored wire of the present disclosure is preferably produced as follows, for example. A steel sheet (thickness: 0.5 mm) is used as a steel shell material and subjected to cold bending in the width direction to obtain a U-shape, where the steel sheet has a chemical composition containing 0.05 % to 0.20 % of C, 0.15 % to 0.30 % of Si, and 0.2 % to 1.2 % of Mn, with the balance being Fe. Next, the obtained steel shell material is filled with metal powder and flux powder for wire whose compositions have been adjusted to obtain the desired wire composition, and then cold drawing is performed to obtain a flux-cored wire for SAW.
The metal powder is a metal powder or an alloy powder having a chemical composition containing metal components that are added to the chemical composition of the steel shell material to obtain the welding wire composition of the present disclosure. The flux powder for wire is also preferably a flux powder with the same or similar composition as the flux for welding described below.

[Flux for welding]

Next, we conducted repeated studies on fluxes that are compatible with the welding wire having the above-mentioned composition. As a result, we found that it is effective to design the flux composition as a calcia-magnesia basic oxide system with a high basicity [BL] of 1.5 to 2.4 so that the toughness of weld metal is not impaired.

The basicity [BL] of the flux is an index of the reactivity of the flux, and it is expressed as a ratio of the basic components and the acidic components of the flux and is obtained with the following formula (1). The content of each component in the formula (1) is expressed in mass percent.

$$BL = (\%CaO+\%MgO+\%BaO+\%SrO+\%Na_2O+\%K_2O+\%Li_2O+\%CaF_2 +0.5\%MnO+0.5\%FeO)/ \\ (\%SiO_2+0.5\%Al_2O_3+0.5\%TiO_2+0.5\%ZrO_2) \tag{1}$$

When the basicity [BL] is less than 1.5, the oxygen content in weld metal is high, and the low-temperature toughness is insufficient. When the basicity [BL] exceeds 2.4, the bead appearance and the slag removability are deteriorated. Therefore, the basicity [BL] is set to 1.5 to 2.4. It is preferably 1.8 or more. It is preferably 2.2 or less.

There are molten types, sintered types, and bonded types of flux, and any type can be used. Examples of the chemical composition that can be used include calcia-magnesia flux, as well as the above-mentioned calcia-magnesia basic oxide flux. Among these, it is necessary to adjust the various oxide components to be blended to adopt a flux whose basicity [BL] is 1.5 to 2.4.

[Relationship between welding heat input and groove cross-sectional area]

We also found that good mechanical properties can be obtained when the welding heat input is controlled within an appropriate range in the present disclosure. That is, we found that when welding is performed under welding conditions of equal to or less than the maximum welding heat input derived by the following formula (2) with respect to the groove cross-sectional area of a welded portion, specified mechanical properties can be obtained by obtaining an appropriate cooling rate and suppressing coarsening of crystal grains. When the welding heat input is larger than this value, the crystal grains are coarsened due to the reduced cooling rate, which significantly deteriorates the yield strength. However, if welding is performed within the heat input conditions derived by the following formula (2), it is possible to obtain a room temperature yield strength of 400 MPa or more.

$$S[mm^2]/Q[J/mm] \geq 0.028 \tag{2}$$

where $Q[J/mm] = I[A]\times E[V]\times 60/V[mm/min]$, $I \geq 300[A]$, $E \geq 15[V]$, $V \geq 100[mm/min]$, "S" is the groove cross-sectional area, "Q" is the welding heat input, "I" is the welding current, "E" is the arc voltage, and "V" is the welding speed.

The above formula (2) can be converted into the following formula (3), and the welding heat input (Q) with respect to the groove cross-sectional area (S) can be determined using the formula (3).

$$Q[J/mm] \leq S[mm^2]/0.028 \tag{3}$$

[Other welding conditions]

Groove machining is performed so that the steel materials to be welded form a predetermined groove shape. The shape of the groove to be formed is not particularly limited, and examples thereof include a V-shaped groove, a single bevel groove, an X-shaped groove, and a K-shaped groove, which are commonly used for welded steel structures.

In submerged arc welding, submerged arc welding in one pass is sometimes applied, but in the case of controlling the welding heat input or in the case of thick steel materials, multilayer welding in two or more passes is applied. For the high-Mn-containing steel material of the present disclosure, multilayer welding can be performed as appropriate to increase the strength of weld metal, and it is preferable to perform welding in three or more layers.

[Steel material]

The base metal should be a steel material, especially a high-Mn-containing steel material. A method of producing the high-Mn-containing steel material may be, for example, a method of obtaining a steel raw material by conventional steelmaking and casting processes, subjecting the steel raw material to hot rolling in which the heating conditions, rolling reduction, and the like are adjusted, and then performing cooling to obtain a steel material (steel plate). The thickness of the steel plate after rolling is, for example, 6 mm to 100 mm.

The high-Mn-containing steel material is a high-strength steel material for cryogenic use, and it preferably has a Mn content of 15.0 % to 30.0 %. Specifically, it is a steel material having a basic composition containing C: 0.20 % to 0.80 %, Si: 0.15 % to 0.90 %, Mn: 15.0 % to 30.0 %, P: 0.030 % or less, S: 0.030 % or less, Ni: 3.00 % or less, and Cr: 1.0 % to 8.0 %, with the balance being Fe and inevitable impurities. In addition to the basic composition, at least one selected from the following may be contained as optional components if necessary: V: 2.00 % or less, Ti: 1.00 % or less, Nb: 1.00 % or less, Al: 0.100 % or less, Cu: 1.00 % or less, N: 0.120 % or less, O (oxygen): 0.0050 % or less, B: 0.0030 % or less, and REM: 0.0200 % or less.

[Basic composition of steel material]

The following describes the basic composition of the high-Mn steel material to be welded in the present disclosure.

[C: 0.20 % to 0.80 %]

C is an inexpensive and important element that stabilizes the austenite phase. To achieve this effect, the C content needs to be 0.20 % or more. On the other hand, when the C content exceeds 0.80 %, Cr carbides are excessively formed, and the cryogenic impact toughness is deteriorated. Therefore, the C content is preferably in a range of 0.20 % to 0.80 %. It is more preferably 0.30 % or more. It is more preferably 0.70 % or less. It is still more preferably 0.40 % or more. It is still more preferably 0.60 % or less.

[Si: 0.15 % to 0.90 %]

Si is an element that acts as a deoxidizer and dissolves in steel to contribute to increasing the strength of the steel material through solid solution strengthening. To achieve these effects, the Si content needs to be 0.15 % or more. On the other hand, when the Si content exceeds 0.90 %, the welding workability is deteriorated. Therefore, the Si content is preferably in a range of 0.15 % to 0.90 %. It is more preferably 0.20 % or more. It is more preferably 0.75 % or less. It is still more preferably 0.30 % or more. It is still more preferably 0.60 % or less.

[Mn: 15.0 % to 30.0 %]

Mn is a relatively inexpensive element that stabilizes the austenite phase, and it is an important element in the present disclosure for achieving both high strength and excellent cryogenic toughness. To achieve these effects, the Mn content needs to be 15.0 % or more. On the other hand, when the Mn content exceeds 30.0 %, the effect of improving the cryogenic toughness is saturated while an effect commensurate with the content cannot be expected, which is economically disadvantageous. Further, if it is contained in a large amount exceeding 30.0 %, it causes deterioration in welding workability and cuttability, promotes segregation, and accelerates the occurrence of stress corrosion cracking. Therefore, the Mn content is preferably in a range of 15.0 % to 30.0 %. It is more preferably 17.5 % or more. It is more preferably 28.0 % or less. It is still more preferably 20.0 % or more. It is still more preferably 26.0 % or less.

[P: 0.030 % or less]

P, as an impurity, segregates at grain boundaries and serves as a starting point for stress corrosion cracking. In the present disclosure, it is desirable to reduce the P content as much as possible, but it is acceptable if the P content is 0.030 % or less. Therefore, the P content is preferably in a range of 0.030 % or less. It is more preferably 0.028 % or less. It is still more preferably 0.024 % or less. On the other hand, a long time of refining is required to extremely reduce the P content to less than 0.002 %, which increases the refining cost. Therefore, the P content is preferably 0.002 % or more from an economical point of view.

[S: 0.030 % or less]

S is present as sulfide-based inclusions in steel and deteriorates the ductility and the cryogenic toughness of a steel material and weld metal. Therefore, the S content is preferably reduced as much as possible, but a content of 0.030 % or less is acceptable. It is more preferably 0.010 % or less. On the other hand, a long time of refining is required to extremely reduce the S content to less than 0.0005 %, which increases the refining cost. Therefore, the S content is preferably 0.0005 % or more from an economical point of view.

[Ni: 3.00 % or less]

Ni is an element that strengthens the austenite grain boundaries, which segregates at the grain boundaries to improve the cryogenic impact toughness. To achieve this effect, the Ni content needs to be 0.01 % or more. Ni also stabilizes the austenite phase, and therefore, a further increase in Ni content stabilizes the austenite phase and improves the cryogenic impact toughness of weld metal. However, Ni is an expensive element, and a content exceeding 3.00 % is economically disadvantageous. Therefore, the Ni content is preferably 0.01 % or more. The Ni content is preferably 3.00 % or less. It is more preferably 1.00 % or more. It is more preferably 2.00 % or less.

[Cr: 1.0 % to 8.0 %]

Cr is an element that stabilizes the austenite phase at cryogenic temperatures and effectively contributes to improving the cryogenic toughness and the steel material strength. It is also an effective element for forming microcrystalline regions. To achieve these effects, the Cr content needs to be 1.0 % or more. On the other hand, when the content exceeds 8.0 %, Cr carbides are formed, and the cryogenic toughness and the stress corrosion cracking resistance are deteriorated. Therefore, the Cr content is preferably in a range of 1.0 % to 8.0 %. It is more preferably 2.5 % or more. It is more preferably 7.0 % or less. It is still more preferably 3.5 % or more. It is still more preferably 6.5 % or less.

[Optional composition of steel material]

The above components are the basic composition of the steel material. In addition to the basic composition, the composition of the steel material may further contain at least one selected from the following as optional components: V: 2.00 % or less, Ti: 1.00 % or less, Nb: 1.00 % or less, Al: 0.100 % or less, Cu: 1.00 % or less, N: 0.120 % or less, O (oxygen): 0.0050 % or less, B: 0.0030 % or less, and REM: 0.0200 % or less.

[V: 2.00 % or less]

V is an element that contributes to stabilizing the austenite phase and also contributes to improving the strength of a steel material and improving the cryogenic toughness. To achieve these effects, the V content is preferably 0.001 % or more. On the other hand, when the V content exceeds 2.00 %, coarse carbonitrides increase, which serve as starting points for fracture and deteriorate the cryogenic impact toughness. Therefore, if contained, the V content is preferably 2.00 % or less. It is more preferably 0.003 % or more. It is more preferably 1.70 % or less. It is still more preferably 1.50 % or less.

[Ti: 1.00 % or less]

When Ti is contained in an amount exceeding 1.00 %, carbides are coarsened and serve as starting points for fracture, and coarsening of crystal grains is suppressed to deteriorate the cryogenic toughness. Therefore, the Ti content is preferably 1.00 % or less. It is more preferably 0.50 % or less. It is still more preferably 0.30 % or less.

[Nb: 1.00 % or less]

When Nb is contained in an amount exceeding 1.00 %, carbides are coarsened and serve as starting points for fracture, and coarsening of crystal grains is suppressed to deteriorate the cryogenic toughness. Therefore, the Nb content is preferably 1.00 % or less. It is more preferably 0.50 % or less. It is still more preferably 0.30 % or less.

[Al: 0.100 % or less]

Al acts as a deoxidizer and is the most commonly used element in a molten steel deoxidizing process of a steel material. To achieve this effect, the Al content is preferably 0.001 % or more. On the other hand, when the Al content exceeds 0.100 %, Al is mixed into a weld metal portion during welding, which deteriorates the toughness of the weld metal. Therefore, the Al content is preferably in a range of 0.100 % or less. It is more preferably 0.020 % or more. It is more preferably 0.060 % or less. It is still more preferably 0.030 % or more. It is still more preferably 0.040 % or less.

[Cu: 1.00 % or less]

Cu is an element that contributes to increasing the strength of a steel material through increasing hardenability and through solid solution strengthening. To ensure this effect, the Cu content is preferably 0.001 % or more. On the other hand, when the content exceeds 1.00 %, the weldability is deteriorated, and defects are likely to occur during the production of steel material. Therefore, if contained, the Cu content is preferably in a range of 0.001 % to 1.00 %. It is more preferably 0.10 % or more. It is more preferably 0.70 % or less. It is still more preferably 0.25 % or more. It is still more preferably 0.60 % or less.

[N: 0.120 % or less]

N is an element that stabilizes the austenite phase and effectively contributes to improving the cryogenic toughness. To achieve this effect, the N content is preferably 0.005 % or more. On the other hand, when the N content exceeds 0.120 %, nitrides or carbonitrides are coarsened, and the cryogenic toughness is deteriorated. Therefore, the N content is preferably in a range of 0.005 % to 0.120 %. It is more preferably 0.006 % or more. It is more preferably 0.040 % or less. It is still more preferably 0.020 % or more.

[O (oxygen): 0.0050 % or less]

O (oxygen) is present as oxide-based inclusions in steel and deteriorates the cryogenic toughness of a steel material. Therefore, the O (oxygen) content is preferably reduced as much as possible, but a content of 0.0050 % or less is acceptable. Therefore, the O (oxygen) content is preferably in a range of 0.0050 % or less. It is more preferably 0.0045 % or less. On the other hand, a long time of refining is required to extremely reduce the O (oxygen) content to less than 0.0005 %, which increases the refining cost. Therefore, the O (oxygen) content is preferably 0.0005 % or more from an economical point of view. It is still more preferably 0.0010 % or more. It is still more preferably 0.0040 % or less.

[B: 0.0030 % or less]

B is an element that segregates at grain boundaries and contributes to improving the toughness of a steel material. To achieve this effect, the B content is preferably 0.0005 % or more. On the other hand, when the B content exceeds 0.0030 %, coarse nitrides and carbides increase, which deteriorates the toughness. Therefore, if contained, the B content is preferably in a range of 0.0005 % to 0.0030 %. It is more preferably 0.0015 % or less. It is still more preferably 0.0010 % or less.

[REM: 0.0200 % or less]

REM is an element that has the effect of improving the toughness of a steel material, as well as the ductility and the sulfide stress corrosion cracking resistance, by controlling the morphology of inclusions. To achieve this effect, the REM content is preferably 0.0010 % or more. On the other hand, when the REM content exceeds 0.0200 %, the amount of non-metallic inclusion increases, and the toughness, as well as the ductility and the sulfide stress cracking resistance, deteriorate. Therefore, if contained, the REM content is preferably in a range of 0.0010 % to 0.0200 %. It is more preferably 0.0015 % or more. It is more preferably 0.015 % or less. It is still more preferably 0.0050 % or more. It is still more preferably 0.010 % or less.

[Balance composition]

The balance other than the above-mentioned components consists of Fe and inevitable impurities. Examples of the inevitable impurity include Ca, Mg, and Mo, and a total content of 0.05 % or less is acceptable.

EXAMPLES

[Welding conditions]

The following further describes the present disclosure based on examples. However, the following examples are merely for illustrating and explaining the present disclosure in more detail and are not intended to limit the scope of the present disclosure.

The solid wire listed in Table 1 was obtained as follows. Molten steel with the wire composition was obtained by steelmaking in a vacuum melting furnace and cast into a steel ingot weighing 1000 kg. The obtained steel ingot was heated to 1200 °C and then subjected to hot rolling and then cold rolling to prepare a 4.0 mmø wire for submerged arc welding.

The flux-cored wire was obtained as follows. The compositions of metal powder and flux were adjusted to achieve the wire composition listed in Table 1. A steel sheet having a composition containing, in mass%, 0.1 % of C, 0.2 % of Si, and 0.5 % of Mn, with the balance being Fe, was used as a shell. The metal powder and the flux whose compositions had been adjusted were sealed in the shell, and the wire was drawn to a diameter of 4.0 mm. The component listed in Table 1 is the sum of the component in the shell, the metal powder, and the flux.

Welding was performed using the wires for welding (diameter 4.0 mm) with the compositions listed in Table 1 and the high-Mn steel materials for cryogenic use with the various compositions listed in Table 2, without preheating, in a flat position, and under conditions of current: 500 A to 700 A (AC), voltage: 30 V to 33 V, welding speed: 140 mm/min to 300 mm/min, temperature between passes: 100 °C to 150 °C, and in 2 to 5 layers. The flux for welding used was commercially available molten flux and bonded flux with a different basicity of 0.5 to 2.8.

[Table 1]

Table 1

| Wire No. | Chemical composition (mass%) | | | | | | | | | | | | Wire shape | Remarks |
|---|---|---|---|---|---|---|---|---|---|---|---|---|---|---|
| | C | Si | Mn | P | S | Ni | Cr | Mo | B | N | V,Ti,Nb | Cu,Ca,REM | | |
| a | 0.59 | 0.37 | 27.0 | 0.012 | 0.021 | 2.46 | 0.5 | 1.51 | 0.0009 | 0.020 | - | - | Flux cored wire | Example |
| b | 0.65 | 0.58 | 17.5 | 0.026 | 0.016 | 0.05 | 3.7 | 1.25 | 0.0007 | 0.100 | - | - | Solid wire | Example |
| c | 0.31 | 0.26 | 18.2 | 0.017 | 0.028 | 2.12 | 0.8 | 2.13 | 0.0004 | 0.004 | - | - | Solid wire | Example |
| d | 0.35 | 0.41 | 20.4 | 0.021 | 0.013 | 4.17 | 1.4 | 1.54 | 0.0006 | 0.013 | V:0.02,Ti:0.03 | - | Solid wire | Example |
| e | 0.71 | 0.72 | 27.1 | 0.016 | 0.008 | 7.12 | 2.7 | 0.05 | 0.0008 | 0.112 | Nb:0.02 | - | Flux cored wire | Example |
| f | 0.39 | 0.21 | 24.2 | 0.013 | 0.015 | 1.28 | 0.8 | 2.81 | 0.0009 | 0.050 | - | Cu:0.12 | Flux cored wire | Example |
| g | 0.27 | 0.82 | 15.5 | 0.016 | 0.024 | 0.02 | 1.6 | 3.05 | 0.0003 | 0.008 | - | REM:0.006 | Solid wire | Comparative Example |
| h | 0.52 | 0.37 | 14.2 | 0.009 | 0.017 | 2.31 | 0.9 | 1.51 | 0.0008 | 0.011 | Ti:0.02 | Ca:0.001 | Flux cored wire | Comparative Example |

[Table 2]

Table 2

| Steel material No. | Chemical composition (mass%) | | | | | | | | | | | | | | | | |
|---|---|---|---|---|---|---|---|---|---|---|---|---|---|---|---|---|---|
| | C | Si | Mn | P | S | Cu | Ni | Cr | V | Nb | Ti | B | Al | N | Ca | O | REM |
| A | 0.47 | 0.27 | 25.0 | 0.015 | 0.006 | 0.51 | <0.01 | 3.5 | <0.005 | <0.001 | <0.005 | 0.0017 | <0.004 | 0.0111 | <0.0005 | 0.0046 | - |
| B | 0.54 | 0.50 | 25.7 | 0.019 | 0.006 | 0.57 | 0.01 | 3.8 | 0.006 | 0.001 | 0.001 | 0.0027 | 0.0010 | 0.0599 | 0.0001 | 0.0034 | - |
| C | 0.44 | 0.48 | 24.1 | 0.016 | 0.007 | <0.01 | <0.01 | 4.6 | <0.005 | 0.001 | <0.005 | 0.0003 | 0.0430 | 0.0111 | <0.0005 | 0.0016 | 0.0100 |
| D | 0.15 | 0.11 | 22.1 | 0.012 | 0.005 | 0.25 | 0.01 | 2.9 | 0.007 | 0.001 | 0.001 | 0.0010 | 0.0010 | 0.0055 | 0.0001 | 0.0049 | 0.0040 |

The obtained weld metal was evaluated in terms of bead appearance and slag removability, and it was subjected to a tensile test and an impact test.

[Bead appearance and slag removability]

The bead appearance was evaluated by measuring the bead width of a stationary portion of the welded joints produced and determining the difference between the maximum and minimum bead widths. Those in which the difference in bead width was 3.0 mm or less were judged to be "good".

The slag removability was evaluated as "good" when slag could be completely removed after welding only by blows with a chipping hammer, and "poor" otherwise.

[Mechanical properties of weld metal]

A tensile test piece (parallel portion diameter 6 mmø) and a 10 mm×10 mm×55 mm full-size or 7.5 mm×10 mm×55 mm sub-size Charpy impact test piece (V-notch) were collected from the obtained weld metal and subjected to a tensile test and an impact test in accordance with the provisions of JIS Z 3111.

The tensile test was performed three times each at room temperature, and the average value of the obtained values (0.2 % proof stress) was taken as the tensile property of the weld metal using the wire.

Further, the Charpy impact test was performed three times each to determine the absorbed energy ($vE_{-196}$) at a test temperature of -196 °C, and the average value was taken as the cryogenic impact toughness of the weld metal using the wire. The position of the V-notch of the Charpy impact test piece was set at the center of the weld metal of a thickness of 1/2t.

The results are listed in Table 3. The asterisk (*) in the upper right corner of the absorbed energy ($vE_{-196}$) value means that it is a value obtained by performing the Charpy impact test on a 7.5 mm sub-size test piece. When the absorbed energy ($vE_{-196}$) of the 7.5 mm sub-size test piece multiplied by 6/5 is less than the desired absorbed energy ($vE_{-196}$) of 28 J for the full-size test piece, it is considered that the desired cryogenic toughness is not achieved.

[Table 3]

Table 3

| Test No. | Steel material No. | Wire No. | Flux basicity [BL] | Thickness [t] (mm) | Groove cross-sectional area [S] (mm$^2$) | Current [I] (A) | Voltage [E] (V) | Welding speed [V] (mm/min) | Welding heat input [Q] (J/mm) (=I×E×60/V) | Bead appearance | Slag removability | Tensile strength (MPa) | Yield strength (0.2% proof stress) (MPa) | Absorbed energy [vE$_{-196}$] (J) | Groove cross-sectional area/ welding heat input [S/Q] | Remarks |
|---|---|---|---|---|---|---|---|---|---|---|---|---|---|---|---|---|
| 1 | A | a | 1.5 | 9 | 90 | 500 | 30 | 300 | 3,000 | Good | Good | 795 | 405 | 35* | 0.030 | Example |
| 2 | A | b | 1.5 | 12 | 130 | 500 | 30 | 300 | 3,000 | Good | Good | 815 | 430 | 88 | 0.043 | Example |
| 3 | A | c | 1.8 | 15 | 180 | 500 | 30 | 300 | 3,000 | Good | Good | 854 | 475 | 70 | 0.060 | Example |
| 4 | A | d | 1.8 | 15 | 180 | 550 | 32 | 210 | 5,029 | Good | Good | 837 | 442 | 86 | 0.036 | Example |
| 5 | A | e | 1.8 | 20 | 280 | 500 | 32 | 210 | 4,571 | Good | Good | 848 | 480 | 79 | 0.061 | Example |
| 6 | A | f | 1.8 | 20 | 280 | 700 | 33 | 140 | 9,900 | Good | Good | 829 | 476 | 62 | 0.028 | Example |
| 7 | B | a | 20 | 12 | 130 | 500 | 30 | 300 | 3,000 | Good | Good | 830 | 438 | 88 | 0.043 | Example |
| 8 | B | a | 2.2 | 15 | 180 | 500 | 30 | 300 | 3,000 | Good | Good | 877 | 464 | 77 | 0.060 | Example |
| 9 | B | a | 2.2 | 15 | 180 | 550 | 32 | 210 | 5,029 | Good | Good | 835 | 432 | 66 | 0.036 | Example |
| 10 | C | a | 1.8 | 12 | 130 | 500 | 30 | 300 | 3,000 | Good | Good | 844 | 433 | 66 | 0.043 | Example |
| 11 | C | a | 0.5 | 9 | 90 | 550 | 32 | 210 | 5,029 | Good | Good | 769 | 368 | 10* | 0.018 | Comparative Example |
| 12 | C | b | 0.5 | 20 | 280 | 700 | 33 | 140 | 9,900 | Good | Good | 855 | 442 | 18 | 0.028 | Comparative Example |
| 13 | D | e | 2.8 | 15 | 180 | 700 | 33 | 140 | 9,900 | Poor | Poor | 624 | 352 | 56 | 0.018 | Comparative Example |
| 14 | c | g | 1.5 | 9 | 90 | 500 | 30 | 300 | 3,000 | Good | Good | 818 | 421 | 9* | 0.030 | Comparative Example |
| 15 | A | h | 1.5 | 9 | 90 | 550 | 32 | 210 | 5,029 | Good | Good | 776 | 371 | 10* | 0.018 | Comparative Example |
| 16 | A | b | 1.5 | 12 | 130 | 550 | 32 | 210 | 5,029 | Good | Good | 805 | 392 | 96 | 0.026 | Comparative Example |

| Test No. | Steel material No. | Wire No. | Flux basicity [BL] | Thickness [t] (mm) | Groove cross-sectional area [S] (mm²) | Current [I] (A) | Voltage [E] (V) | Welding speed [V] (mm/min) | Welding heat input [Q] (J/mm) (=I×E×60/V) | Bead appearance | Slag removability | Tensile strength (MPa) | Yield strength (0.2% proof stress) (MPa) | Absorbed energy [vE₋₁₉₆] (J) | Groove cross-sectional area/ welding heat input [S/Q] | Remarks |
|---|---|---|---|---|---|---|---|---|---|---|---|---|---|---|---|---|
| 17 | A | c | 1.5 | 12 | 130 | 700 | 33 | 140 | 9,900 | Good | Good | 780 | 375 | 90 | 0.013 | Comparative Example |
| 18 | A | d | 1.8 | 15 | 180 | 700 | 33 | 140 | 9,900 | Good | Good | 803 | 390 | 99 | 0.018 | Comparative Example |
| 19 | B | a | 2.0 | 12 | 130 | 550 | 32 | 210 | 5,029 | Good | Good | 789 | 396 | 62 | 0.026 | Comparative Example |
| 20 | B | a | 2.0 | 12 | 130 | 700 | 33 | 140 | 9,900 | Good | Good | 792 | 381 | 73 | 0.013 | Comparative Example |
| 21 | B | f | 2.2 | 15 | 180 | 700 | 33 | 140 | 9,900 | Good | Good | 761 | 378 | 46 | 0.018 | Comparative Example |
| 22 | C | b | 2.0 | 12 | 130 | 550 | 32 | 210 | 5,029 | Good | Good | 822 | 395 | 72 | 0.026 | Comparative Example |
| 23 | C | a | 2.2 | 12 | 130 | 700 | 33 | 140 | 9,900 | Good | Good | 788 | 386 | 73 | 0.013 | Comparative Example |

(*: 7.5mm sub-s ize)

In the tables, underline indicates that it is outside the scope of the present disclosure.

In all of Examples, it was possible to obtain a weld metal that had both high strength and excellent cryogenic toughness where the yield strength (0.2 % proof stress) at room temperature was 400 MPa or more and the absorbed energy ($vE_{-196}$) in the Charpy impact test at a test temperature of -196 °C was 28 J or more. Further, in Examples, it was possible to obtain a bead with good slag removability and a good shape where the difference between the maximum and minimum bead widths is 3 mm or less.

On the other hand, in Comparative Examples outside the scope of the present disclosure, a weld metal that had the desired good bead shape, high strength, and excellent cryogenic toughness could not be obtained, where either the weld bead shape was poor or the absorbed energy ($vE_{-196}$) was less than 28 J.

In Test Nos. 11 and 12, the basicity of the flux is low and out of the range of the present disclosure, so that the oxygen content of the weld metal is high, and the absorbed energy ($vE_{-196}$) at -196 °C is less than 27 J, indicating that the desired cryogenic toughness cannot be secured. Further, in Test No. 13, the flux basicity is higher than the range of the present disclosure, so that firm slag is formed on the bead surface, the slag removability is poor, and a good bead appearance cannot be obtained. In addition, the C content and the Si content of the steel material are lower than the preferred range of the present disclosure, and predetermined tensile strength and yield strength cannot be obtained. In Test Nos. 14 and 15, the Mn content in the wire is low, so that the austenite is unstable, and the desired impact properties cannot be obtained.

In Test Nos. 16 to 23, the relationship between the groove cross-sectional area and the welding heat input does not satisfy the above-described formula (2). As a result, the welding heat input is excessive, and the yield strength does not reach the specified value.

The relationship between the groove cross-sectional area and the welding heat input is illustrated in FIG. 1 based on the results in Table 3. FIG. 1 summarizes the welding conditions used in the tests of the present disclosure in terms of welding heat input and groove cross-sectional area. Those with a yield strength (0.2 % proof stress) at room temperature of more than 400 MPa are indicated as "∘", and "×" otherwise. The upper side of the straight line in the figure represents the range of the present disclosure where the value of groove cross-sectional area [S]/welding heat input [Q] is 0.028 or more, and the weld metal welded under the welding conditions of Examples all has good yield strength of 400 MPa or more.

On the other hand, in Comparative Examples outside the scope of the present disclosure, the welding heat input is excessive for the thickness and the groove of each Comparative Example, resulting in excessive crystal grain size. Further, the yield strength is below 400 MPa in all Comparative Examples, and the required yield strength cannot be obtained.

## Claims

1. A submerged arc welding method, comprising welding with a combination of a wire for submerged arc welding and flux having a basicity [BL] of 1.5 to 2.4, wherein

   the wire for submerged arc welding comprises a chemical composition containing, in mass%, C: 0.20 % to 0.80 %, Si: 0.15 % to 0.90 %, Mn: 17.0 % to 28.0 %, P: 0.030 % or less, S: 0.030 % or less, Ni: 0.01 % to 10.00 %, Cr: 0.4 % to 4.0 %, Mo: 0.01 % to 3.50 %, and N: 0.120 % or less, with the balance being Fe and inevitable impurities;
   the basicity [BL] is defined by the following formula (1), BL = $(\%CaO+\%MgO+\%BaO+\%SrO+\%Na_2O+\%K_2O+\%Li_2O+\%CaF_2+0.5\%MnO+0.5\%FeO)/(\%SiO_2+0.5\%Al_2O_3+0.5\%TiO_2+0.5\%ZrO_2)$

   where the content of each component in the formula (1) is expressed in mass%; and
   the welding is performed with welding heat input [Q] satisfying the following formula (2),

   $$S[mm^2]/Q[J/mm] \geq 0.028 \quad (2)$$

   where Q[J/mm] = $I[A]\times E[V]\times 60/V[mm/min]$,
   $I \geq 300[A]$, $E \geq 15[V]$, $V \geq 100[mm/min]$, and
   where "S" is a groove cross-sectional area, "Q" is welding heat input, "I" is welding current, "E" is arc voltage, and "V" is welding speed.

2. The submerged arc welding method according to claim 1, wherein the chemical composition further contains, in mass%, at least one selected from the group consisting of V: 0.040 % or less, Ti: 0.040 % or less, and Nb: 0.040 % or less.

3. The submerged arc welding method according to claim 1 or 2, wherein the chemical composition further contains, in mass%, at least one selected from the group consisting of Cu: 1.00 % or less, Ca: 0.010 % or less, and REM: 0.020 % or less.

4. The submerged arc welding method according to any one of claims 1 to 3, wherein welding is performed in 3 or more layers.

5. The submerged arc welding method according to any one of claims 1 to 4, wherein a steel material to be welded is a high-strength and high-Mn steel material for cryogenic use, which comprises a chemical composition containing, in mass%, C: 0.20 % to 0.80 %, Si: 0.15 % to 0.90 %, Mn: 15.0 % to 30.0 %, P: 0.030 % or less, S: 0.030 % or less, Ni: 3.00 % or less, and Cr: 1.0 % to 8.0 %, with the balance being Fe and inevitable impurities.

6. The submerged arc welding method according to claim 5, wherein the chemical composition of the steel material further contains, in mass%, at least one selected from the group consisting of V: 2.00 % or less, Ti: 1.00 % or less, Nb: 1.00 % or less, Al: 0.100 % or less, Cu: 1.00 % or less, N: 0.120 % or less, O (oxygen): 0.0050 % or less, B: 0.0030 % or less, and REM: 0.0200 % or less.

# FIG. 1

## INTERNATIONAL SEARCH REPORT

International application No.

**PCT/JP2022/032458**

### A. CLASSIFICATION OF SUBJECT MATTER

*C22C 38/00*(2006.01)i; *C22C 38/58*(2006.01)i; *B23K 35/30*(2006.01)i; *B23K 35/362*(2006.01)i; *B23K 35/368*(2006.01)i; *B23K 9/18*(2006.01)i

FI: B23K35/362 310C; B23K9/18 F; B23K35/30 A; B23K35/30 320C; B23K35/368 D; C22C38/00 302A; C22C38/00 302B; C22C38/58

According to International Patent Classification (IPC) or to both national classification and IPC

### B. FIELDS SEARCHED

Minimum documentation searched (classification system followed by classification symbols)

C22C38/00; C22C38/58; B23K35/30; B23K35/362; B23K35/368; B23K9/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/075777 A1 (POSCO) 22 April 2021 (2021-04-22) entire text, all drawings | 1–6 |
| A | JP 6621572 B1 (JFE STEEL CORP) 18 December 2019 (2019-12-18) entire text | 1–6 |
| A | JP 2017-502842 A (POSCO) 26 January 2017 (2017-01-26) entire text | 1–6 |
| A | WO 2020/203335 A1 (JFE STEEL CORP) 08 October 2020 (2020-10-08) entire text | 1–6 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/032458**

| Patent document cited in search report | | | Publication date (day/month/year) | Patent family member(s) | | | Publication date (day/month/year) |
|---|---|---|---|---|---|---|---|
| WO | 2021/075777 | A1 | 22 April 2021 | EP | 4046743 | A1 | |
| | | | | entire text, all drawings | | | |
| | | | | KR 10-2021-0045165 | | A | |
| JP | 6621572 | B1 | 18 December 2019 | US | 2021/0323101 | A1 | |
| | | | | entire text | | | |
| | | | | WO | 2020/039643 | A1 | |
| | | | | EP | 3838474 | A1 | |
| | | | | KR 10-2021-0033519 | | A | |
| | | | | CN | 112566750 | A | |
| JP | 2017-502842 | A | 26 January 2017 | US | 2016/0271739 | A1 | |
| | | | | entire text | | | |
| | | | | WO | 2015/083878 | A1 | |
| | | | | EP | 3078447 | A1 | |
| | | | | KR 10-2015-0066190 | | A | |
| | | | | CN | 105813799 | A | |
| WO | 2020/203335 | A1 | 08 October 2020 | KR 10-2021-0136132 | | A | |
| | | | | entire text | | | |
| | | | | CN | 113631321 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6621572 B